**Europäisches Patentamt**

**European Patent Office**

**Office européen des brevets**

(11) Numéro de publication: **0 187 563**
**B1**

# (12) FASCICULE DE BREVET EUROPÉEN

(45) Date de publication du fascicule du brevet:
08.03.89

(21) Numéro de dépôt: **85402297.7**

(22) Date de dépôt: **25.11.85**

(51) Int. Cl.⁴: **F 25 C 3/04**

(54) Perfectionnement aux dispositifs d'alimentation de canons à neige dans les installations d'enneigement artificiel de pistes de ski.

(30) Priorité: **27.11.84 FR 8418236**

(43) Date de publication de la demande:
**16.07.86 Bulletin 86/29**

(45) Mention de la délivrance du brevet:
**08.03.89 Bulletin 89/10**

(84) Etats contractants désignés:
**AT CH DE IT LI SE**

(56) Documents cité:
**EP-A-0 004 803**
**EP-A-0 018 280**
**DE-A-2 551 180**
**FR-A-966 043**
**US-A-2 011 329**
**US-A-3 372 872**
**US-A-3 706 414**

(73) Titulaire: **LE FROID INDUSTRIEL YORK S.A., B.P. 10, F-44471 Carquefou Cedex (FR)**

(72) Inventeur: **Girardin, Pierre, 9 avenue de Cheverny, F-44800 Saint Herblain (FR)**

(74) Mandataire: **Phélip, Bruno, c/o Cabinet Harlé & Phélip 21, rue de La Rochefoucauld, F-75009 Paris (FR)**

## Description

La présente invention concerne un perfectionnement aux dispositifs d'alimentation de canons à neige dans les installations d'enneigement artificiel des pistes de ski, telles que décrites par exemple dans les brevets US-A-3 706 414, 3 372 872, ou encore 2 676 471.

L'enneigement artificiel des pistes de ski est réalisé de façon connue par la pulvérisation sur l'emplacement prévu, d'un mélange d'air et d'eau sous la forme d'un brouillard, dans l'air ambiant à basse température au moyen d'un canon à neige et, pour la présente installation selon l'invention, au moyen de canons à neige tels que décrits dans le brevet EP-18 280 de la demanderesse.

Dans les installations actuelles d'enneigement artificiel, l'eau et l'air sous pression sont distribués par des conduites longeant toutes les pistes à enneiger. Une installation de ce type est décrite dans le brevet US-A-3 706 414 où apparaîssent, en particulier, les moyens de fabrication de la neige. Dans ce document, on remarque que les débits d'eau et d'air sous pression sont réglés au moyen de vannes distinctes, indépendantes l'une de l'autre l'eau et l'air sont ensuite mélangés et évacués par une ou deux buses. Il est fréquent, avec un tel dispositif de commande de l'eau et de l'air, de rencontrer des difficultés de réglage des débits, ce qui provoque des incidents du genre congélation de l'eau, en aval de la vanne, ou encore aspersion de la piste avec de l'eau qui forme une couche de glace. Parfois des abris disposés le long des conduites et espacés de trente à cinquante mètres environ, permettent d'effectuer les branchements des canons à neige.

L'évolution des techniques a permis d'envisager une évolution dans la gestion des installations d'enneigement des pistes de ski; le document EP-A-0 004 803 brosse les possibilités de ces évolutions et, sur le terrain on a effectivement mis en oeuvre des moyens nouveaux.

Le choix des pistes et la mise en route de l'installation sont décidés par un ordinateur central qui prend en compte la température, de place en place, le long de la piste. La seule opération manuelle préalable résulte du choix des canons qui seront utilisés pour recharger tel ou tel sec teur de la piste particulièrement érodé par exemple; cette opération manuelle consiste à ouvrir les vannes pour l'air et pour l'eau dans chaque abri sélectionné, avant d'autoriser la mise en service de l'installation.

Compte-tenu des variations importantes et imprévisibles de la température le long des pistes, il arrive fréquemment que la zone choisie se trouve dans des conditions de température qui ne permettent pas la mise en route de l'installation et celle-ci reste arrêtée alors qu'elle aurait pu fonctionner normalement dans une zone voisine, ou sur une autre piste.

La présente invention vise à remédier aux inconvénients des installations actuelles.

Un premier but de l'invention est est d'obtenir un dispositif automatique associant une grande precision et une parfaite sécurité dans l'enchainement des ouvertures et fermetures des flux d'eau et d'air. Cette automatisation permet en outre de supprimer les intervention manuelles d'opérateurs dans les abris disposés le long de la piste mettant l'installation en veille; ces interventions manuel les étant le plus souvent pénibles, en raison des conditions climatlques, et très coûteuses.

Il est également alors possible d'utiliser au mieux les conditions climatiques et notamment de la température pour pouvoir produire une quantité maximale de neige en tout endroit des pistes; il est notamment connu que la température a une grande influence sur la quantité de neige produite, et que cette quantite produite par un canon pour une température de -4°, peut être pratiquement doublée, pour une température de -20°.

Un autre but de l'invention est de réaliser une installation dont les capacités de production de neige sont fortement multipliées grâce à la possibilité de disposer et de contrôler un nombre très important de canons en bordure des pistes.

Un autre but important de l'invention est de parvenir à la réalisation d'une installation qui ne constitue pas un investissement prohibitif, compte-tenu du nombre très important de canons qu'il est possible d'utiliser.

Pour atteindre ces buts, l'invention propose un nouveau dispositif d'alimentation de canons à neige; ce dispositif est situé dans chaque abri, le long de la piste, et il est constitué d'un distributeur à tiroir, à fonctions multiples, connecté aux conduites d'eau et d'air sous pression pour alimenter un canon à neige.

Les distributeurs à tiroir sont des organes connus, utilisables dans des applications diverses et sous des formes très variées. Le document FR-A-966 043 par exemple, concerne une application particulière d'un distributeur à tiroir pour la commande automatique des générateurs de chaleur.

Un autre document, le brevet US-A-2 011 329 concerne un distributeur du type robinet mélangeur branché sur des conduites d'eau chaude et d'eau froide.

Le brevet DE-A-2 551 180 montre un distributeur constitué d'éléments modulaires.

Tous ces documents montrent les différentes possibilités d'un distributeur à tiroir, lesquelles possibilités sont exploitées selon l'invention pour lui faire executer les fonctions suivantes:

- alimentation en air du canon à neige;
- alimentation en eau du canon à neige;
- purge du circuit d'alimentation du canon à neige, à partir du distributeur.

Le dispositif d'alimentation pour canon à neige est situé dans des abris le ou de pistes de ski et ces abris sont traversés par des conduites d'eau et d'air sous pression.

Conformément à l'invention, le distributeur à tiroir comprend un corps allonge, muni: de tubulures d'entrées d'eau et d'air connectées aux conduites d'eau et d'air, de tubulures de sorties d'eau et d'air connectées par des tuyauteries au canon à neige, et d'un orifice de purge.

Le distributeur comprend également un tiroir cylindrique muni d'obturateurs cylindriques et entraîné par un organe de commande, de manière à coulisser dans le corps entre une position de fermeture du flux d'eau et d'air dans laquelle la tubulure de sortie d'eau est en communication avec l'orifice de purge, pour assurer une vidange, et une position d'ouverture des flux d'eau et d'air et de fermeture de vidange.

Selon une autre disposition de l'invention, le dispositif d'alimentation comporte des moyens de commande automatique du tiroir du distributeur constitués d'un organe de manoeuvre du tiroir et d'un système d'asservissement de l'organe de manoeuvre.

Selon une disposition préférentielle, le flux d'air traverse le corps du distributeur, dans sa partie extrême, située du côté de l'organe de manoeuvre du tiroir, et l'orifice de purge se situe à l'autre extrémité du corps.

Le corps du distributeur comporte des sections cylindriques de passage des flux d'eau et d'air, coopérant avec des obturateurs cylindriques sur le tiroir et, selon une disposition de l'invention, la distance séparant les arêtes amont des sections cylindriques de passage des flux d'eau et d'air dans le corps, est supérieure à la distance séparant les joints d'étanchéité, en rapport, des obturateurs d'eau et d'air sous pression, du tiroir, pour réaliser un retard de l'ouverture d'eau par rapport à l'ouverture l'air.

Selon une disposition préférentielle de l'invention, l'obturateur d'eau comporte, en aval du joint d'étanchéité, une portion cylindrique réalisant une perte de charge importante et dont la longueur est sensiblement égale au tiers de la course du tiroir, pour établir progressivement le flux d'eau à travers le distributeur.

Selon une autre disposition de l'invention, la purge est réalisée au moyen d'une mise en communication de la tubulure de sortie d'eau du distributeur, avec l'extérieur, à travers une cavité cylindrique du tiroir et des orifices de passage, perces à travers le tiroir, et débouchant dans la volute de la tubulure de sortie, laquelle cavité cylindrique est obturée par une tige cylindrique solidaire du corps; la distance séparant le joint d'étanchéité de la tige cylindrique, de l'arête amont de la section de passage du flux d'air, est supérieue à la distance séparant l'arête d'entrée de la cavité cylindrique du tiroir, du joint d'étanchéité de l'obturateur de passage du flux d'air et, la distance séparant le joint d'étanchéité de la tige cylindrique, est inférieure à la distance séparant l'arête d'entrée de la cavité cylindrique du tiroir, du joint d'étanchéité de l'obturateur du passage du flux d'eau, pour réaliser un retard de la fermeture de la purge par rapport à l'ouverture de l'air, ce retard étant toutefois inférieur au retard d'ouverture d'eau par rapport à la même ouverture d'air.

Pour permettre une plus grande efficacité de l'installation face aux conditions de température notamment, le distributeur réalise une fonction complémentaire de réglage automatique du débit d'eau destine au canon.

Selon l'invention, les moyens de réglage du débit d'eau consistent essentiellement, dans le corps du distributeur, en une partie à section variable, en forme de pavillon, croissante d'aval en amont qui, en coopération avec l'arête aval de l'obturateur de passage du flux d'eau, lamine ledit flux d'eau, avant le passage cylindrique qui est bordé par des arêtes amont et aval.

Selon une disposition préférentielle de l'invention, le réglage du débit du flux d'eau traversant le distributeur s'effectue, par déplacement contrôlé du tiroir dans le corps du distributeur et la section de passage du flux d'eau est telle que, pour un même déplacement du tiroir, le pourcentage d'accroissement de débit est constant, quelle que soit la pression de l'eau d'alimentation. Cette caractéristique permet d'utiliser le même distributeur pour des canons de types différents et dont les débits peuvent varier dans des proportions importantes, de l'ordre de 1 à 10.

Selon une autre disposition de l'invention, le dispositif d'alimentation du canon à neige comporte un organe de manoeuvre du tiroir du distributeur. Cet organe de manoeuvre est constitué d'un moto-réducteur électrique à deux sens de rotation. Ce moto-réducteur agit sur le tiroir, par l'intermédiaire d'une vis s'engageant dans un alésage fileté de l'extrémité du tiroir.

Selon une autre disposition de l'invention, la vis de manoeuvre du tiroir comporte un roulement de butée permettant de réduire le couple de manoeuvre du tiroir.

Selon une autre disposition de l'invention, le tiroir est immobilisé, partiellement en rotation, au moyen d'un doigt guidé dans une lumière longitudinale, lequel doigt coopère avec un dispositif indicateur de position du tiroir.

Selon une disposition préférentielle de l'invention, l'organe de manoeuvre du tiroir est disposé dans un boîtier solidaire de l'extrémité du corps du distributeur.

Le moto-réducteur électrique est commandé, selon l'invention, au moyen d'un système d'asservissement constitué d'un ordinateur central de gestion de l'enneigement des pistes relié par une ligne du genre ligne téléphonique, à des modules électroniques de conversion disposés dans les boîtiers des dispositifs d'alimentation des canons.

Selon l'invention, ces modules électroniques de conversion comportent essentiellement un modem, un convertisseur analogique numérique, des entrées et sorties logiques, le tout géré par un microprocesseur comportant une mémoire morte du type EPROM. Les sorties logiques de puissance sont connectées à l'organe de manoeuvre du tiroir du distributeur les entrées logiques sont connectées à l'indicateur de position et de fin de course disposé dans le boîtier; les entrées analogiques reçoivent les signaux du capteur de pression disposé dans la tubulure de sortie d'eau du distributeur, et des capteurs de température et d'hygrométrie disposés à proximité du canon à neige.

L'invention a également pour objet, l'installation qui comprend, d'une part, un tel dispositif d'alimentation de canon à neige et d'autre part, l'ensemble permettant la commande à distance dudit dispositif d'alimentation constitué notamment par les modules électroniques de conversion connectés chacun à une ligne téléphonique unique, qui est reliée à un ordinateur, par l'intermédiaire d'une interface.

Ainsi, l'invention permet une alimentation des canons à neige, sans avoir à déplacer un ou plusieurs opérateurs, auprès de chacun des abris; l'ordinateur central de gestion prend en compte tous les paramètres liés au fonctionnement du ou des canons à neige et, en fonction de ces paramètres, fait un choix parmi les canons et met en service les groupes moto-pompes et moto-compresseurs. L'ordinateur permet également de modifier, en fonction de la température, le débit d'eau de chaque canon et, en fonction du nombre de canons à neige à utiliser, de modifier le choix des canons pour adapter ce choix aux possibilités du groupe moto-pompes et moto-compresseurs.

L'invention sera mieux comprise à l'aide de la description et des dessins annexés, donnés à titre indicatif et dans lesquels:

- la figure 1 est une représentation schématique d'une installation selon l'invention, pour l'enneigement artificiel d'une piste de ski,
- la figure 2 est une représentation synoptique du module électronique de conversion disposé dans l'abri,
- la figure 3 est une représentation schématique d'un abri, en coupe, disposé le long de la piste et contenant un dispositif d'alimentation de canon selon l'invention,
- la figure 4 est une vue en coupe du distributeur à tiroir pour l'alimentation d'un canon à neige,
- la figure 5 est une vue schématique, en coupe de l'organe de manoeuvre du tiroir,
- la figure 6 est une vue en coupe du corps du distributeur,
- la figure 7 est une vue avec des coupes partielles du tiroir du distributeur,
- la figure 8 est une vue partielle, en coupe du distributeur montrant la zone de passage du flux d'eau, sans le dispositif de purge,
- la figure 9 est une courbe montrant le débit d'eau en fonction de la course utile du tiroir pour trois types de canons différents,
- la figure 10 représente le profil de la chambre de laminage du corps du distributeur, pour le passage du flux d'eau.

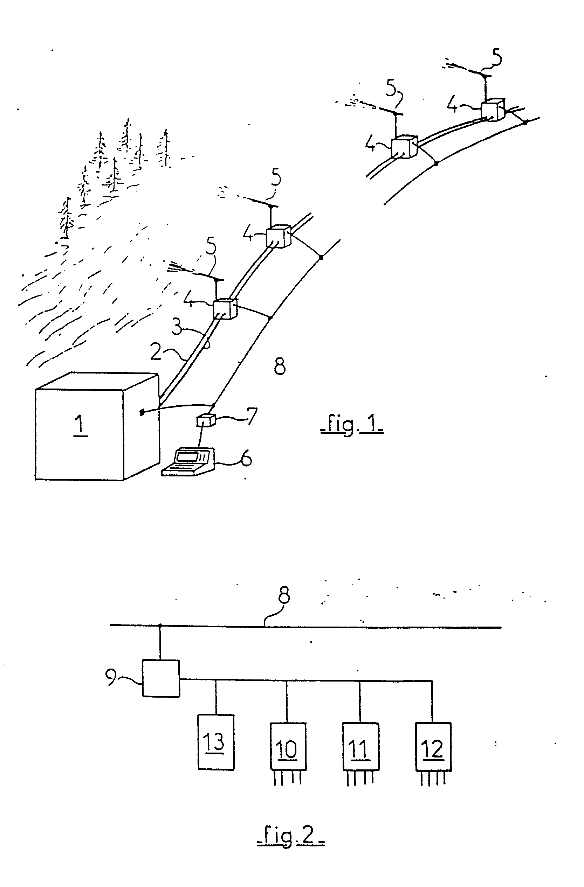

Telle que représentée figure 1, l'installation d'enneigement comporte une salle des machines 1 renfermant les groupes moto-pompes et moto-compresseurs qui alimentent en eau et en air sous pression les conduites 2 et 3 disposées le long de la piste à enneiger.

Sur les conduites 2 et 3, on trouve des abris 4 espacés de trente à cinquante mètres environ, qui permettent d'une part, de réaliser plus commodément les branchements des canons à neige 5 et, d'autre part, de protéger et maintenir hors gel, ces mêmes branchements et les accessoires liés au fonctionnement des canons 5.

Un ordinateur central 6 de gestion de l'enneigement d'une ou plusieurs pistes, est relié par l'intermédiaire d'une interface 7 et d'une ligne spécialisée 8 du type ligne téléphonique à des modules électroniques de conversion représentés figure 2, disposés dans la salle des machines 1 et dans chaque abri 4.

L'installation comprend encore des capteurs de température et d'hygrométrie non représentés.

Ces capteurs sont disposés au niveau de chaque abri 4, tout au long des pistes, à proximité immédiate des canons à neige 5. Les signaux de ces capteurs sont destinés à l'ordinateur 6 qui assure la gestion et la commande de l'enneigement de toutes les pistes. En fonction, notamment, des indications de température reçues, l'ordinateur va choisir le ou les canons pouvant fonctionner; il va également mettre en service, dans la salle des machines 14, les goupes moto-pompes et moto-compresseurs et commander l'alimentation, automatiquement, du ou des canons sélectionnés.

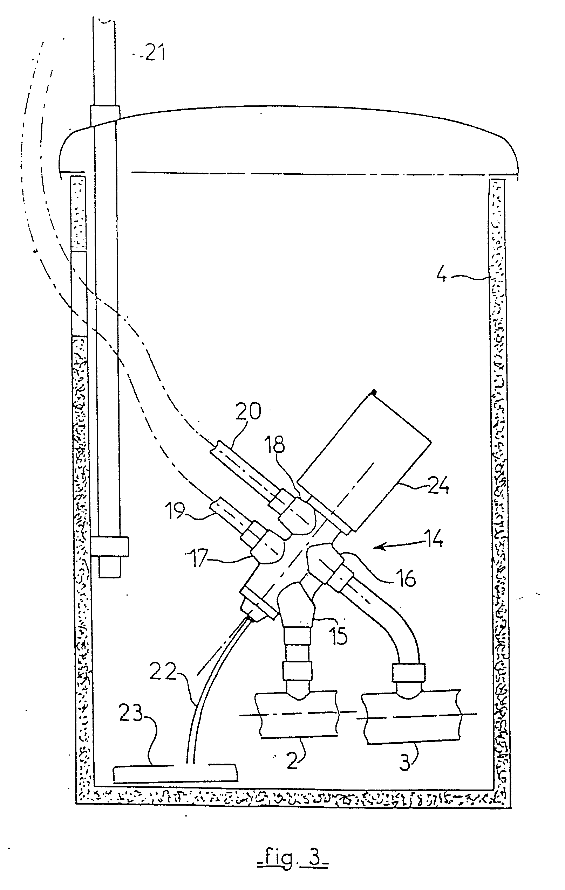

Le module électronique de conversion est représenté schématiquement figure 2, il est essentiellement constitué d'un modem 9 relié à la ligne téléphonique spécialisée 8, d'un convertisseur analogique numérique 10, d'entrées 11 et de sorties 12 logiques, l'ensemble étant géré par un micro-processeur 13, dont le programme est enregistré dans une mémoire morte du type EPROM. Le convertisseur analogique numérique 10 comporte plusieurs voies d'entrée de signaux analogiques provenant de capteurs de pression, de température, d'hygrométrie. L'entrée logique 11 est reliée au dispositif d'alimentation. Les signaux des capteurs et de l'entrée logique sont transmis à l'ordinateur 6 qui, en retour, et selon son programme d'enneigement, et par l'intermédiaire des sorties logiques 12 du ou des modules électroniques de conversion correspondants, met en action d'une part, les groupes moto-pompes et compresseurs de la salle des machines 1 et d'autre part, le ou les dispositifs d'alimentation 14, représentés figure 3, du ou des canons 5 choisis.

Selon les possibilités de la logique de transmission, on peut disposer d'un nombre d'abris très important. Avec, par exemple, une logique de transmission à huit bits, on peut prevoir 255 abris, ce qui revient à couvrir environ une dizaine de kilomètres. On peut prévoir, également, compte-tenu de la longueur et de l'imbrication des pistes, des dispositifs régénérateurs de signaux.

La figure 3 représente, schématiquement, un abri 4 traversé par les conduites 2 et 3 d'eau et d'air sous pression. Cet abri 4 renferme un dispositif 14 d'alimentation d'un canon à neige; ce dispositif 14 est branché par ses tubulures d'entrée 15 et 16, sur les conduites d'eau 2 et d'air 3 resprectivement; les sorties 17 et 18 d'eau et d'air du dispositif 14, sont connectées au canon à neige au moyen de tuyauteries souples 19 et 20. Le canon à neige est monté sur une perche 21 solidaire de l'abri.

Le dispositif d'alimentation 14 comporte également des moyens permettant de réaliser une purge de la tuyauterie 19 d'alimentation du canon 5 et du canon lui-même. La vidange de la tuyauterie 19 du canon 5 et du dispositif d'alimentation 14 s'effectue par gravité; l'eau s'écoulant par le tuyau 22 dans la conduite de drainage 23 qui récupère les eau de ruissellement à la partie basse de chaque abri 4. Le dispositif d'alimentation 14 est représenté en position inclinée, selon un angle de l'ordre de 45°, pour permettre sa vidange totale par gravité, afin d'éviter tout risque de gel. Il est prévu également de disposer autour, ou dans une cavité, à l'interieur du corps du dispositif d'alimentation 14, un moyen de chauffage non représenté, du type canne, qui permet d'eviter ou d'atténuer les risques de gel. Le module électronique de conversion figure 2, est de préférence logé dans un boîtier 24 disposé dans le prolongement supérieur du dispositif d'alimentation 14.

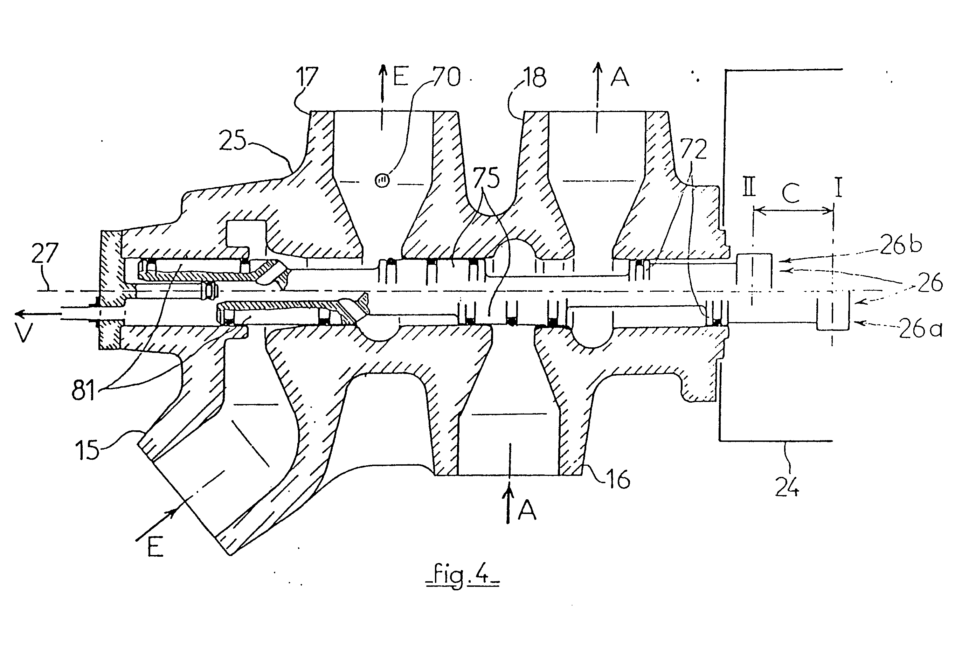

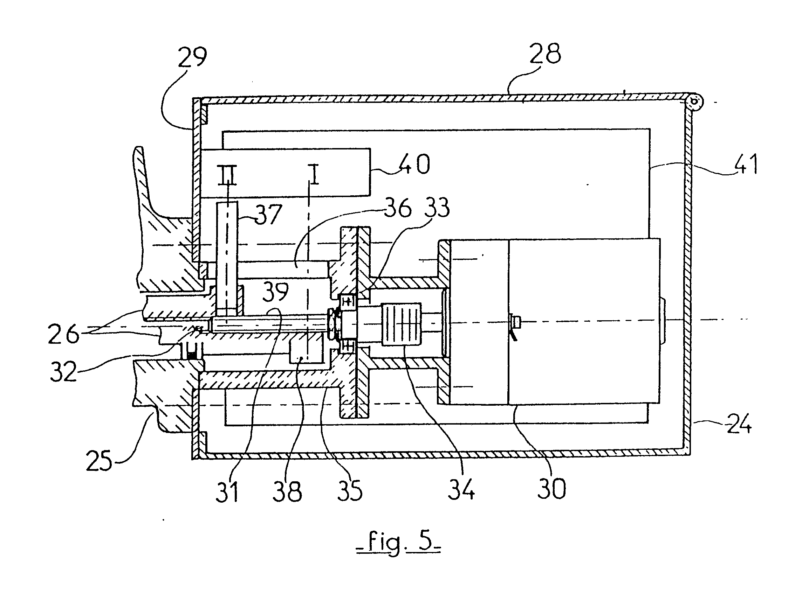

Le dispositif d'alimentation 14 est représenté figure 4; il se présente sous la forme d'un distributeur à tiroir, comprenant un corps 25 et un tiroir 26 manoeuvré par des moyens représentés figure 5, lesquels moyens sont disposés dans le boîtier 24.

Le corps 25 du distributeur est traversé par le flux d'ar (A), le flux d'eau (E) et le flux d'eau de vidange (V). Les entrées et sorties des flux d'eau et d'air sont disposées dans un même plan passant par l'axe longitudinal 27 du corps 25 et du tiroir 26.

La partie du corps 25, traversee par le flux d'air, se situe de préférence, du côté du boîtier 24 de façon que, en cas de fuite, entre le distributeur et le boîtier, il n'y ait pas de risque d'endommagement des éléments électriques contenus dans ledit boîtier 24. Les différents flux sont séparés par des zones de séparation sur le corps 25, lesquelles zones coopèrent avec des soupapes cylindriques du tiroir 26.

Le tiroir 26 est représenté en deux moitiés; la moitié 26a est représentée en position active de fermeture des flux d'eau (E) et d'air (A), et d'ouverture du flux de vidange (V) la moitié 26b du tiroir 26 est représentée en position active d'ouverture des flux d'eau (E) et d'air (A) et de fermeture du flux de vidange (V). Entre ce deux positions extrêmes I et II qui correspondent, respectivement, à la position fermée des flux d'eau et d'air et à la position ouverte des mêmes flux d'eau et d'air, la course totale C du tiroir se décompose en une série de portions de courses successives qui correspondent à des mise en oeuvre des différentes fonctions du distributeur.

Le déplacement du tiroir 26 de la position I à la position II s'effectue à vitesse très faible, au moyen d'un organe de commande (figure 5), disposé dans le boîtier 24. Ce boîtier 24 comporte une trappe de visite 28 sur le dessus et il est monté sur le corps 25, par l'intermédiaire d'une plaque 29, pour permettre un montage et un démontage plus faciles dudit boîtier 24.

L'organe de manoeuvre du tiroir 26 est constitué d'un moto-réducteur électrique 30, à double sen de rotation, qui entraîne une vis 31 de manoeuvre du tiroir 26, lequel tiroir comporte, axialement, à son extrémité, un alésage fileté 32. La vis 31 est de préférence montée sur un roulement de butée 33, pour réduire le couple de manoeuvre du tiroir 26, et elle est solidaire du moto-réducteur 30, par un accouplement 34. Le support 35 du roulement de butée 33, fixe sur le corps 25 du distributeur, comporte une lumière 36, disposée longitudinalement, dans laquelle coulisse un doigt 37 d'immobilisation partielle en rotation du tiroir 26. La longueur de la lumière 36 est supérieure à la course du tiroir 26. Le doigt 37 est disposé perpendiculairement à l'axe 27, dans une collerette 38, qui constitue l'extrémité 39 du tiroir 26. Le doigt 37 se prlonge au-delà de la lumière 36 pour agir sur un indicateur 40 de position et plus particulièrement de fin de course du tiroir 26. Cet indicateur 40 est logé dans le boîtier 24, sur la plaque frontale 29, solidaire du corps 25 du distributeur.

L'indicateur 40 de fin de course du tiroir est relié au module électronique de conversion 41, disposé dans le boîtier 24 il est connecté à l'entrée logique 11 du module électronique de conversion (figure 2). Cette entrée logique 11 est prévue pour recevoir les informations de deux dispositifs d'alimentation de canon à neige 5.

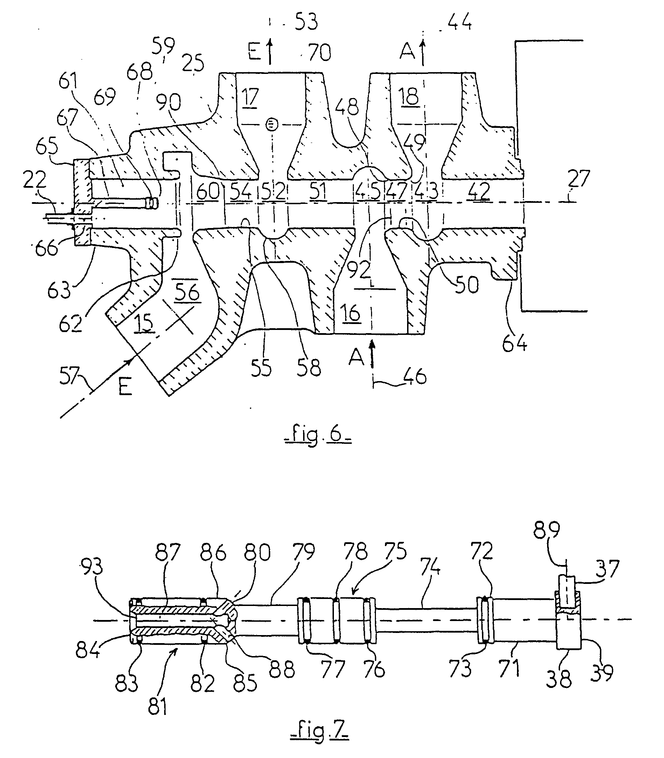

Le corps 25 du distributeur est représenté (figure 6) sans le tiroir 26. Ce corps 25 comporte, à partir de l'extrémité recevant le boîtier 24, une zone cylindrique axiale de séparation 42, entre l'extérieur et le flux d'air (A) et plus particulièrement, la volute de sortie 43 du flux d'air, qui est prolongée par la tubulure de sortie 18; la volute de sortie 43 et la tubulure 18 sont alignées selon un même plan médian 44, perpendiculaire à l'axe longitudinal 27, du corps 25. La tubulure d'entrée 16 du flux d'air (A) se prolonge également par une volute 45, alignées toutes deux, selon un plan médian 46, perpendiculaire à l'axe longitudinal 27, du corps 25. Les deux volutes 43 et 45 sont séparées par un passage axial 47; la longueur du passage d'air 47 est sensiblement égale à la moitié de la course du tiroir. Ce passage 47 comporte, de chaque côté, des chanfreins 48 et 49, qui délimitent une zone cylindrique 50, faisant office de siège; la longueur de cette zone 50 est sensiblement égale à la moitié de la longueur du passage 47.

Une zone cylindrique axiale 51 sépare les flux d'eau (E) et d'air (A) dans le corps 25; la longueur de cette zone 51 est, dans l'exemple décrit, légèrement supérieure à la course C du tiroir.

Au-delà de cette zone de séparation 51, toujours en s'éloignant du boîtier 24, on trouve une volute de sortie d'eau 52, prolongée par la tubulure de sortie 17; la tubulure 17 et la volute 52 étant alignées, selon un même plan médian 53, perpendiculaire à l'axe longitudinal 27, du corps 25. On trouve ensuite, un passage cylindrique axial 54, du flux d'eau (E) dont l'enveloppe externe 55 constiue le siège d'obturation dudit flux d'eau. La longeur du passage cylindrique du flux d'eau, est sensiblement supérieure à celle de passage cylindrique 47 du flux d'air. En amont du passage cylindrique 54, on trouve la volute d'entrée d'eau 56 qui prolonge la tubulure d'entrée d'eau 15. La tubulure d'entrée d'eau 15 est centrée sur un axe 57 qui fait un angle de l'ordre de 45° avec l'axe longitudinal 27 du corps 25, pour mettre le distributeur en position inclinée, selon la figure 3. Cette position inclinée a pour but de permettre une vidange totale ou quasi totale du corps 25 du distributeur et, plus particulièrement, du fond 58 de la volute de sortie d'eau 52. La partie annulaire 59 de la volute d'entrée d'eau se prolonge par un pavillon 60, jusqu'au passage cylindrique 54. Ce pavillon 60 est centré sur l'axe longitudinal 27 et son rôle sera explicité plus loin. La section du pavillon est décroissante, d'amont en aval, et le profil dudit pavillon sera détaillé, plus loin également.

Après la volute d'entrée du flux d'eau 56, on trouve une zone cylindrique axiale de séparation 61 qui isole ladite volute 56 et s'étend jusqu'à l'extrémité du corps 25 du distributeur. L'entrée de la zone cylindrique 61 comporte une collerette 62 qui s'étend dans la partie annulaire 59 de la volute, sur une longueur sensiblement supérieure à la moitié de la longueur axiale de ladite partie annulaire 59. La longeur de la zone cylindrique de séparation 61 est du même ordre que celle de la zone de séparation 42, c'est-à-dire supérieure à la course C du tiroir 26.

L'extrémité 63 du corps 25, à l'opposé de l'extrémité 64 supportant le boîtier 24, comporte un chapeau 65, solidaire de ladite extrémité 63, par tous moyens appropriés. Ce chapeau 65 est muni d'un orifice 66 de vidange communiquant avec l'extérieur, par l'intermédiaire de la tuyauterie 22 (figure 3), qui déverse le flux d'eau de vidange V, dans la conduite 23.

Pour répondre au souci de vidange totale du corps 25 du distributeur, l'orfice 66 de purge est disposé dans la partie basse du chapeau 65.

Le chapeau 65 comporte encore une tige cylindrique 67 centrée sur l'axe longitudinal 27, qui s'étend à l'intérieur de la zone cylindrique de séparation 61. Cette tige 67 est munie à son extrémité d'un obturateur 68 et d'un joint annulaire d'étanchéité 69.

Le diamètre de l'obturateur 68 est de l'ordre du tiers du diamètre de la zone cylindrique de séparation 61. La longueur séparant le chapeau 65 du joint d'étanchéité 69 est sensiblement supérieure à la course C du tiroir 26. On peut prévoir de réaliser l'extrémité 63 du corps 25, de façon séparée, dudit corps, pour permettre notamment un usinage plus aisé du pavillon 60. Dans ce cas, l'extrémité 63 se présenterait sous la forme d'un manchon cylindrique qui comprendrait toute la zone cylindrique de séparation 61.

Le corps 25 comporte encore, dans la tubulure de sortie 17 du flux d'eau (E), un orifice 70 destiné à récevoir un capteur de pression qui sera relié au module électronique de conversion 41 disposé dans le boîtier 24, et plus particulièrement au convertisseur analogique numérique 10 (figure 2) dudit module électronique de conversion. A noter que le convertisseur analogique numérique 10 peut être prévu pour recevoir les signaux de deux capteurs de pression correspondant à deux dispositifs d'alimentation placés à proximité l'un de l'autre, dans un même abri 4 et qui sont destinés à alimenter deux canons à neige 5.

Les zones cylindriques de séparation 42, 51, 61 et le passages cylindriques 47, 54, sont centrés sur l'axe longitudinal 27 du corps 25 et le diamètre de ces zones et de ces passages, est de préférence identique.

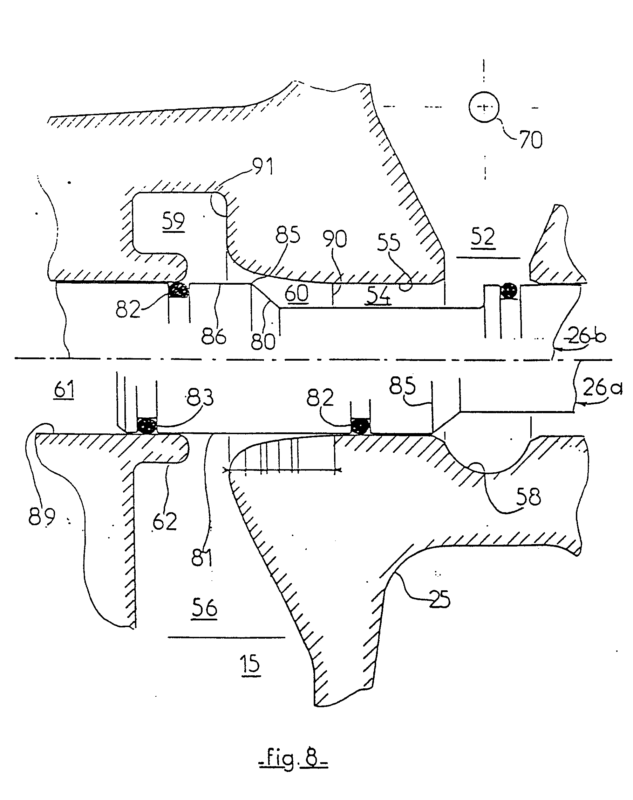

Le tiroir 26 qui se déplace dans les zones de séparation 42, 51, 61 et les passages 47, 54, est représenté figure 7.

En partant de l'extrémité 39 du tiroir 26, on trouve la collerette cylindrique 38 dans laquelle est positionné le doigt 37 d'immobilisation partielle en rotation du tiroir. Le diamètre de la collerette 38 est sensiblement supérieur au diamètre de la zone de séparation 42 du corps 25.

Cette collerette se prolonge ensuite par une tige cylindrique 71 d'un diamètre sensiblement inférieur au diamètre de la zone de séparation 42 du corps 25 et d'une longueur environ égale à la course C du tiroir. Au bout de cette tige 71, on trouve un obturateur 72 muni d'un joint annulaire d'étanchéité 73. Cet obturateur 72 se situe dans la zone de séparation 42 du corps 25 et isole en permanence, la volute 43 de sortie du flux d'air de l'extérieur, côté boîtier 24.

Au-delà de l'obturateur 72, on trouve une tige 74 dont le diamètre est voisin de la moitié du diamètre de l'obturateur 72 et dont la longueur est égale à la course C augmentée au moins de la longueur axiale de la volute 43 de sortie du flux d'air au niveau de l'axe 27 du corps 25.

La tige 74 relie l'obturateur 72 à un obturateur 75 cylindrique et de même diamètre. Cet obturateur 75 a deux fonctions essentielles: il assure la fermeture du passage 47 du flux d'air A, coupant ainsi l'alimentation en air du canon à neige, et il assure l'isolation entre les flux d'air A et d'eau E, et plus particulièrement l'isolation entre l'arrivée du flux d'air A au niveau de la volute 45 et le départ du flux d'eau E, au niveau de la volute 52 du corps 25.

L'obturateur 75 comporte deux joints annulaires 76 et 77 disposés à chacune de ses extrémités et un joint annulaire central 78. La distance séparant les deux joints d'extrémité 76 et 77 est sensiblement égale à la course C du tiroir 26.

Au-delà de l'obturateur 75, on trouve une nouvelle tige cylindrique 79 dont le diamètre est de l'ordre des deux tiers du diamètre de l'obturateur 75 et dont la longueur est égale, dans l'exemple represénté à deux fois son diamètre. En fait, cette longueur de la tige 79 est en relation avec la longueur de la zone de separation 51 du corps 25.

La tige 79 se prolonge par une partie conique 80 qui raccorde ladite tige à un obturateur cylindrique 81. Le demi-angle au sommet de la partie conique est de l'ordre de 45°. L'obturateur cylindrique 81 réalise plusieurs fonctions. Tout d'abord, il comporte deux joints annulaires d'étanchéité 82 et 83, dont l'un, le joint 83 est situé à l'extrémité 84 du tiroir 26. Ce joint annulaire 83 isole en permanence la volute 56 d'entrée d'eau de l'extérieur, en se déplaçant dans la zone cylindrique de séparation 61 du corps 25. Le deuxième joint annulaire d'étanchéité 82 est situé en retrait par rapport à l'arête aval 85 de l'obturateur 81, au niveau de la partie conique 80; la distance séparant le joint 82 de l'arête 85 est sensiblement égale au rayon de l'obturateur 81. Le rôle de la zone cylindrique 86 située entre le joint 82 et l'arête 85 de l'obturateur 81 sera explicité plus loin.

L'obturateur 81 comporte également un alésage cylindrique axial 87 qui débouche, par l'intermédiaire d'au moins un orifice percé 88, dans la partie conique de raccordement 80. De préférence, on dispose de plusieurs orifices 88, dont l'axe de l'un est disposé dans le plan qui passe par l'axe 89 du doigt 37 de positionnement du tiroir 26, par rapport au corps 25, cet axe 89 se situant dans le plan passant par l'axe longitudinal 27 du corps 25 et par l'axe 57 de la tubulure 15 d'entree du flux d'eau.

Les deux extrémités 38 et 84 du tiroir 26 communiquant avec l'extérieur, ce qui permet de l'équilibrer et de réduire les efforts pour son déplacement dans le corps 25.

La figure 8 représente, de façon détaillée et en coupe, la partie du distributeur à tiroir traversée par le flux d'eau E. Cette partie comporte des moyens qui permettent de réaliser plusieurs fonctions et notamment une fonction obturation et une fonction réglage du débit d'eau.

Le tiroir 26 est représenté en deux moitiés 26a et 26b; la partie 26a du tiroir est en position d'obturation de l'arrviee d'eau E; la partie 26b est en position d'ouverture de l'arrivée d'eau E.

L'arrêt du flux d'eau E, à travers le corps 25, s'effectue au moyen de l'obturateur 81 et de ses deux joints annulaires d'étanchéité 82 et 83 qui sont, respectivement, en position active, sur l'enveloppe 55 du passage cylindrique 54 et sur la paroi 89 de la zone cylindrique de separation 61.

Le réglage du débit d'eau traversant le corps 25, s'effectue par laminage du flux d'eau entre l'arête 85 de l'obturateur 81 et le pavillon 60 qui prolonge la partie annulaire 59 de la volute 56 et précéde le passage cylindrique 54. La section de passage du flux d'eau entre le pavillon 60 et l'arête 85, varie au fur et à mesure du déplacement du tiroir 26, dans le corps 25, du distributeur.

La course utile du tiroir pour le réglage du débit d'eau, commence lorsque l'arête 85 de l'obturateur 81 arrive au niveau de l'arête fictive 90 séparant le pavillon 60 et le passage cylindrique 54, et elle se termine lorsque l'arête 85 approche du plan vertical 91 d'entrée du pavillon 60.

Entre les positions de l'obturateur 81, où le joint d'étanchéité 82 est en position inactive d'étanchéité, c'est-à-dire dispose en amont de l'arête 90 du corps, et où l'arête 85 atteint l'arête 90, une perte de charge importante est réalisée dans le passage cylindrique 54, entre son enveloppe 55 et la partie cylindrique 86 de l'obturateur 81. Cette perte de charge varie au fur et à mesure du déplacement du tiroir 26 et permet un établissement progressif du débit utile d'eau, à travers le corps. La détente du flux en aval de l'arête 85, s'effectue avec un niveau sonore très faible et, à pleine ouverture, la perte de charge est minime.

Lorsque le débit d'eau commence à s'établir à travers le corps 25, c'est-à-dire lorsque l'arête 85 de l'obturateur 81 se situe en amont de l'arête 90, dudit corps 25, le joint d'étanchéité 82 dudit obturateur 81 se situe nettement en amont dans le pavillon 60, et suffisamment en retrait pour ne pas risquer d'être arraché par le flux d'eau. Lorsque les débits importants sont atteints, c'est-à-dire lorsque le tiroir 26 est en position de grande ouverture, le joint d'étanchéité 82 est protégé en pénétrant dans la zone cylindrique de séparation 61 et plus particulièrement dans la collerette 62 qui est disposée dans le prolongement de ladite zone de séparation 61. Le joint d'étanchéité 82 sera de préférence un joint à haute résistance mécanique.

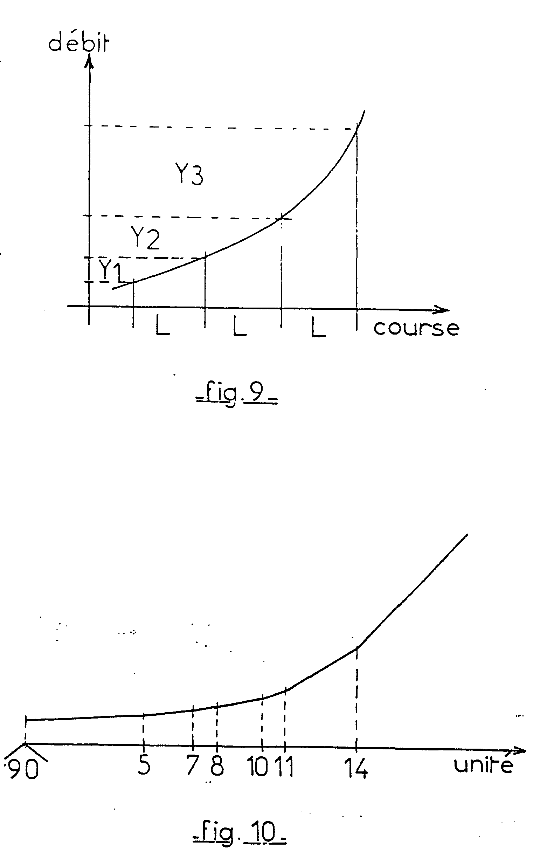

La figure 9 illustre le résultat obtenu lorsque le tiroir 26 est déplacé dans le corps 25 pour faire varier le débit d'eau alimentant le canon à neige branché en sortie du distributeur. On obtient, grâce à l'emploi de canons à neige selon le brevet EP-18 280 de la demanderesse, une proportion de débit, sensiblement constante, quelle que soit la pression du flux d'eau. A titre d'exemple, sur la figure 9, on a situé trois types de canons a neige Y1, Y2, Y3 dont les débits peuvent varier du simple au double.

Ainsi, le petit canon Y1 a un débit pouvant varier de 2,5 à 5 m³/h, le canon moyen Y2 a un débit pouvant varier de 5 à 10 m³/h et le gros canon Y3 a un débit pouvant varier de 10 à 20 m³/h.

On constate, figure 9, que la variation de débit des différents types de canons Y1, Y2, Y3 s'effectue avec une même course utile L du tiroir 26, dans le corps 25 du distributeur. Cette possibilité de faire varier le débit automatiquement pour chaque canon, permet de profiter, au maximum, des conditions favorables de température et, notamment de doubler la quantité de neige produite, lorsque la température passe de -4° à -20°C par exemple.

Ce résultat est plus particulièrement obtenu par le profil du pavillon 60, du corps 25. Le pavillon 60, figure 8, est divisé en un certain nombre de secteurs en forme de tronc de cône, entre l'arête 90 du corps et le plan d'entrée 91 dudit pavillon 60. Un exemple de réalisation du pavillon 60 est représenté figure 10 où apparaît, en fonction de la distance par rapport à l'arête 90, exprimée en unités de longueur, le demi-angle au sommet des troncs de cône successifs. Ainsi, depuis l'arête 90 et sur une distance de cinq unités, le demi-angle fait 1,8°; de cinq à sept unités de l'arête 90, le demi-angle fait 2,6°; de sept à huit unités de l'arête, le demi-angle fait 8,8°; de onze à quatorze unités de l'arête, le demi-angle fait 45° et le tronc de cône se raccorde à la partie annulaire 59 de la tubulure d'entrée 56. Les angles de raccordement, entre les troncs de cône, sont arrondis pour réaliser une meilleure continuité du profil du pavillon 60. Les quatorze unités de longeur correspondent sensiblement au rayon de l'obturateur 81.

Le fonctionnement du distributeur et plus particulièrement la mise en oeuvre des fonctions du distributeur à tiroir est le suivant:

La course C du tiroir se décompose en une série d'étapes successives; à chaque étape, qui correspond à une portion de course bien précise, une fonction particulière du distributeur apparaît et l'ensemble des fonctions s'enchaîne automatiquement, avec une grande précision et une parfaite sécurité.

Ainsi, en partant de la position I, figure 4, c'est-à-dire de la position fermée des flux d'eau et d'air, une première étape après une course C1, correspond à la perte d'étanchéité du flux d'air; le joint 76 de l'obturateur 75 est passé d'une position active d'étanchéité sur l'enveloppe 50 du passage cylindrique 47 à une position inactive d'etanchéité au niveau du chanfrein 48. L'étape suivante, après une course totale C2, correspond à la fermeture de la purge, par la mise en position active du joint d'étanchéité 69 de la tige 67, dans la cavité cylindrique 87 du tiroir 26. De ce fait, la distance qui sépare, sur le corps 25, le joint d'étanchéité 69, de l'arête 92, du chanfrein 48, bordant l'enveloppe 50 du passage 47, est supérieure à la distance qui sépare, sur le tiroir 26, le joint d'étanchéité 76 de l'arête 93, à l'entrée de la cavité cylindrique 87; cette différence procure un retard de fermeture de la purge, par rapport à l'ouverture du flux d'air, et, à l'inverse, elle procure une avance à l'ouverture de la purge, par rapport à la fermeture du flux d'air, lorsque le tiroir 26 va de II à I.

L'étape qui suit, après une course totale C3, correspond à la perte d'étanchéité du flux d'eau; le joint d'étanchéité 82 de l'obturateur 81, du tiroir 26, passe de la position active d'étanchéité, en aval de l'arête 90, du corps, à la position inactive d'étanchéité, en amont de ladite arête 90. D'une part, la distance qui sépare, sur le corps 25, le joint d'étanchéité 69, de l'arête 90, est sensiblement inférieure, et à la limite égale, à la distance qui sépare, sur le tiroir 26, le joint d'étanchéité 82, de l'arête 93, à l'entrée de la cavité cylindrique 87. D'autre part, la distance séparant, sur le corps 25, les arêtes 90 et 92, est supérieure à la distance séparant, sur le tiroir 26, les joints 82 et 76. Ces dispositions realisent, automatiquement, un retard d'ouverture du flux d'eau par rapport à l'ouverture du flux d'air et par rapport à la fermeture de la purge. A l'inverse, ces dispositions réalisent une avance de fermeture du flux d'eau par rapport à l'ouverture de la purge et à la fermeture du flux d'air, lorsque le tiroir 26 passe de la position II à la position I.

L'étape suivante, apres une course totale C4, correspond au passage d'un débit utile d'eau à travers le corps 25; à partir de cette étape, et jusqu'à la position extrême II d'ouverture totale des flux d'eau et d'air, le tiroir est déplacé en fonction du type de canon à neige utilise, pour laminer le flux et ne donner au canon qu'une quantité d'eau déterminée.

Cette quantité d'eau est déterminée par l'ordinateur central de gestion 6, selon le type de canon, selon la température à proximité du canon. L'obtention du débit d'eau déterminé par l'ordinateur 6 s'effectue par un déplacement du tiroir 26 et plus particulièrement de son arête 85, dans le pavillon 60. Compte-tenu du fait que dans l'alimentation en eau des canons à neige de la demanderesse, selon le brevet EP-18 280, la relation entre le débit et la pression répond à une loi bien établie, le contrôle du débit d'eau alimentant le canon à neige s'effectue au moyen du capteur de pression positionné dans l'orifice 70 de la tubulure 17 de sortie du flux d'eau vers le canon à neige.

Le fonctionnement de l'installation d'enneigement représentée figure 1, et comprenant le dispositif d'alimentation 14, tel que décrit en liaison avec les figures 3 à 10, est le suivant:

L'ordinateur central de gestion comporte un programme d'enneigement de la ou des pistes de ski à proximité desquelles sont disposés les canons à neige.

Les conditions atmosphériques sont relevées de place en place et plus particulièrement au niveau de chaque abri 4 où est disposé au moins un canon à neige. Les capteurs de température et d'hygrométrie sont connectés au module de conversion électronique 41 qui est disposé dans le boîtier 24 du dispositif d'alimentation 14 des canons à neige. Les informations des capteurs de température et d'hygrométrie sont transformées par le module électronique de conversion 41, pour être transmises numériquement à l'ordinateur central 6, par l'intermédiaire d'une simple ligne téléphonique 8, sur laquelle sont raccordés tous les modules électroniques de conversion 41, de chaque abri 4. La ligne 8 est reliée à l'ordinateur par une interface 7 qui transforme 6 nouveau les informations numériques. Le module électronique de conversion transmet également à l'ordinateur central 6, des informations sur l'état des fins de course du tiroir 26 du distributeur. Chaque paquet d'informations arrive, avec l'adresse de l'expéditeur et l'ordinateur 6 emmagasine ces informations.

Lorsque, en fonction du programme d'enneigement prévu, les conditions de température et d'hygrométrie sont atteintes, l'ordinateur central 6 provoque tout d'abord la mise en marche, dans la salle des machines, des pompes, compresseurs et de leurs auxiliaires. Cette mise en marche s'effectue par l'intermédiaire des sorties de puissance d'un module électronique de conversion du même type que celui utilisé par les dispositifs d'alimentation 14, et par l'intermédiaire de la même ligne téléphonique 8, ce qui permet de disposer d'une ou de plusieurs salles de machines, selon le cas. Le module électronique de conversion de la salle des machines informe l'ordinateur 6 de l'état des machines et de la température de l'eau par exemple.

L'ordinateur commande également le réchauffage éventuel des corps 25 de chaque dispositif d'alimentation 14.

Lorsque le conduites 2 et 3 d'eau et d'air sous pression sont en charge, l'ordinateur central 6 retourne aux modules 41 ad hoc, c'est-à-dire là où les conditions pour l'enneigement sont favorables, des ordres d'ouverture des distributeurs à tiroirs correspondants. Chaque module électronique de conversion 41 commande, par sa sortie de puissance 12, le moto-réducteur 30 de manoeuvre du tiroir 26. Le tiroir 26 est déplacé dans le corps 25, jusqu'à l'etablissement d'u débit d'eau, dans le canon à neige, en rapport avec les conditions atmosphériques du lieu du canon. Le contrôle du débit est effectué par l'intermédiaire d'un capteur de pression disposé dans la tubulure 17 de sortie du flux d'eau du distributeur. Les informations du capteur sont transmises par l'intermédiaire du module électronique de conversion 41, à l'ordinateur central 6 qui, en retour, donne les ordres pour maintenir la position du tiroir 26 ou la modifier. Pour la mise en marche de départ du canon à neige, l'ordinateur donne un ordre qui permet, grace à une course préétablie du tiroir 26, d'ouvrir le flux d'air; le réglage du débit d'eau s'effectuant ensuite, et aussi selon l'évolution des conditions atmosphériques.

Lorsque la quantité de neige programmée est atteinte, ou lorsque les conditions atmosphériques ne sont plus favorables, l'ordinateur central 6 commande l'arrêt du ou des canons à neige, en activité, en donnant aux modules électroniques de conversion 41 concernés, les ordres de fermeture. Chaque module 41 concerné agit par sa sortie logique 12 de puissance, sur le moto-réducteur 30, pour manoeuvrer le tiroir 26 de façon à l'amener en position de fermeture des flux d'eau et d'air et d'ouverture de la purge, pour vidanger le circuit d'eau du canon.

L'invention ne se limite pas au mode de réalisation décrit.

C'est ainsi que l'organe de commande du distributeur peut être constitué d'un système pneumatique ou hydraulique asservi de la même façon. De même les dimensions du corps du distributeur et du tiroir peuvent varier, ces dimensions dans l'exemple décrit relèvent d'un souci d'encombrement minimum facilitant, par ailleurs, les opérations d'usinage.

L'invention peut également trouver d'autres domaines d'application et plus particulièrement les domaines liés à la protection de la nature et des végétaux, partout ou l'on a avantage à utiliser une installation automatique d'arrosage ou de pulvérisation.

**Revendications**

1. Dispositif d'alimentation pour canon à neige, situé dans des abris (4) le long de la ou des pistes de ski, lesquels abris sont traversés par des conduites d'eau (2) et d'air (3) sous pression, caractérisé en ce qu'il est constitué d'un distributeur à tiroir comprenant d'une part un corps (25) allongé muni:
   - de tubulures d'entrées d'eau (15) et d'air (16) connectées aux conduites d'eau (2) et d'air (3);
   - de tubulures de sorties d'eau (17) et d'air (18) connectées par des tuyauteries (19, 20) au canon à neige;
   - d'un orifice de purge (66); et, d'autre part un tiroir cylindrique (26) muni d'obturateurs cylindriques (72, 75 et 81) et entraîné par un organe de commande de manière à coulisser dans le corps (25) entre une position de fermeture des flux d'eau (E) et d'air (A), dans laquelle la tubulure de sortie d'eau (17) est en communication avec l'orifice de purge (66) pour assurer une vidange (V), et une position d'ouverture des flux d'eau (E) et d'air (A) et de fermeture de vidange (V).

2. Dispositif d'alimentation pour canon à neige, selon la revendication 1, caractérisé en ce qu'il comporte des moyens de commande automatique du tiroir (26) du distributeur, constitués d'une part, d'un organe de manoeuvre (30) du tiroir (26) et, d'autre part, d'un système d'asservissement de l'organe de manoeuvre.

3. Dispositif selon les revendications 1 ou 2, caractérisé en ce que les tubulures (15 à 18) sont situées dans un même plan passant par l'axe longitudinal (27) du corps (25).

4. Dispositif d'alimentation pour canon à neige, selon la revendication 3, caractérisé en ce que le flux d'air (A) traverse le corps (25) du distributeur, dans sa partie extrême, située du côté de l'organe de manoeuvre (30) du tiroir (26); l'orifice (66) de vidange est disposé à l'autre extrémité (63) du corps (25).

5. Dispositif d'alimentation pour canon à neige, selon l'une des revendications 1 à 4, caractérisé en ce que le corps (25) du distributeur est disposé de façon inclinée, dans l'abri (4), pour permettre une vidange totale de l'eau.

6. Dispositif d'alimentation pour canon à neige, selon l'une des revendication 3 à 5, caractérisé en ce que le corps (25) du distributeur, comporte des sections cylindriques (47 et 54) de passage des flux d'air (A) et d'eau (E) coopérant avec des obturateurs cylindriques (75 et 81) sur le tiroir (26) la distance séparant les arêtes (92 et 90) des sections de passage (47, 54) des flux d'air (A) et d'eau (E) dans le corps (25) est supérieure à la distance séparant les joints d'étanchéité (76 et 82), en rapport, des obturateurs (75 et 81) d'eau et d'air sous pression du tiroir (26), pour réaliser un retard de l'ouverture du flux d'eau (E) par rapport à l'ouverture du flux d'air (A).

7. Dispositif d'alimentation pour canon à neige, selon la revendication 6, caractérisé en ce que l'obturateur (81) du flux d'eau, du tiroir (26) comporte en aval du joint d'étanchéité (82), une portion cylindrique (86) réalisant une perte de charge importante et dont la longueur est sensiblement égale au tiers de la course C du tiroir (26), pour établir progressivement le flux d'eau, à travers le distributeur.

8. Dispositif d'alimentation pour canon à neige, selon la revendication 6 ou la revendication 7, caractérisé en ce que la purge est réalisée au moyen d'une mise en communication de la tubulure (17) de sortie d'eau du corps (25) du distributeur, avec l'extérieur, à travers une cavité cylindrique axiale (87) à l'extrémité (84) du tiroir (26), et des orifices (88) de passage, percés à travers le tiroir (26).

9. Dispositif d'alimentation pour canon à neige, selon la revendication 8, caractérisé en ce que la cavité cylindrique axiale (87) du tiroir (26) est obturée par une tige cylindrique (67) munie d'un joint d'étanchéité (69) solidaire d'un chapeau (65) disposé à l'extrémité (63) côté purge, du corps (25) du distributeur (14); la longeur de la tige cylindrique (67) est telle qu'elle procure une avance à l'ouverture de la purge par rapport à la fermeture de l'arrivée d'air.

10. Dispositif d'alimentation pour canon à neige, selon la revendication 8 ou la revendication 9, caractérisé en ce que la distance séparant le joint d'étanchéité (69) de la tige cylindrique (67) de l'arête amont (92) de la section de passage (47) du flux d'air (A) est superieure à la distance séparant l'arête (93) d'entrée de la cavité cylindrique (87) du tiroir (26) et du joint d'étanchéité (76) de l'obturateur (75) du même tiroir (26) et la distance séparant le joint d'étanchéité (69) de la tige cylindrique (67) de l'arête (90) de la section de passage (54) du flux d'eau, est inférieure à la distance séparant l'arête (93) d'entrée de la cavité cylindrique (87) du tiroir (26) du joint d'étanchéité (82) de l'obturateur (81) du même tiroir (26) pour réaliser en cascade: la fermeture de la purge, l'ouverture de l'air et enfin l'ouverture de l'eau.

11. Dispositif d'alimentation pour canon à neige, selon l'une des revendications 1 à 10, caractérisé en ce que le distributeur à tiroir comporte des moyens de réglage du débit d'eau destiné au canon à neige.

12. Dispositif d'alimentation pour canon à neige, selon la revendication 11, caractérisé en ce que les moyens de réglage du débit d'eau consistent, dans le corps (25) du distributeur, en un pavillon (60) croissant de l'aval en amont qui, en coopération avec l'arête (85) de l'obturateur (81) lamine le flux d'eau.

13. Dispositif d'alimentation pour canon à neige, selon la revendication 12, caractérisé en ce que le réglage du débit d'eau traversant le distributeur (14) s'effectue par un déplacement contrôlé du tiroir (26) dans le corps (25) dudit distributeur, avec un pourcentage d'accroissement de debit, sensiblement constant, quelle que soit la pression de l'eau d'alimentation.

14. Dispositif d'alimentation pour canon à neige, selon la revendication 13, caractérisé en ce que l'opération de contrôle de l'alimentation en eau des canons à neige (5) s'effectue par la mesure de la pression dans l'orifice (70) de la tubulure de sortie (17) du flux d'eau, au moyen d'un capteur de pression.

15. Dispositif d'alimentation pour canon à neige, selon l'une des revendications 11 à 14, caractérisé en ce que, en position de grande ouverture, du flux d'eau (E), le joint d'étanchéité (82) de l'obturateur (81) est protégé par une collerette (62) disposée dans la partie annulaire (59) de la volute (56) d'entrée du flux d'eau (E).

16. Dispositif d'alimentation pour canon à neige, selon l'une des revendications 2 à 15, caractérisé en ce que l'organe de manoeuvre (30) du tiroir (26) est constitué d'un moto-réducteur électrique à deux sens de rotation, disposé axialement, dans un boîtier (24) dans le prolongement du corps (25) du distributeur.

17. Dispositif d'alimentation pour canon à neige, selon la revendication 16, caractérisé en ce que le moto-réducteur (30) agit sur le tiroir (26) par l'intermédiaire d'une vis (31) s'engageant dans un alésage (32) de l'extrémité (39) du tiroir (26).

18. Dispositif d'alimentation pour canon à neige, selon la revendication 17, caractérisé en ce que la vis de manoeuvre (31) du tiroir (26) comporte un roulement de butée (33) solidaire du châssis (35) supportant le moto-réducteur (30) pour permettre une réduction du couple de manoeuvre du tiroir (26).

19. Dispositif d'alimentation pour canon à neige, selon l'une des revendications 16 à 18, caractérisé en ce que le tiroir (26) est immobilisé partiellement en rotation, au moyen d'un doigt (37) guidé dans une lumière longitudinale (36) et qui coopère avec une dispositif (40) indicateur de position et de fin de course du tiroir (26).

20. Dispositif d'alimentation pour canon à neige, selon l'une des revendications 16 à 19, caractérisé en ce que le moto-réducteur (30) est commandé au moyen d'un sytème d'asservissement constitué d'un ordinateur central (6) de gestion de l'enneigement des pistes, avec son interface (7) d'un module électronique de conversion (41) disposé dans le boîtier (24) solidaire du distributeur (14) et d'une ligne (8) de liaison entre ladite interface (7) et le module électronique de conversion (41).

21. Dispositif d'alimentation pour canon à neige, selon la revendication 20, caractérisé en ce que le module électronique de conversion est constitué essentiellement d'un modem (9) relié à la ligne téléphonqique (8), d'un convertisseur analogique numérique (10), d'entrée (11) et de sorties (12) logiques, le tout étant géré par un microprocesseur (13).

22. Dispositif d'alimentation pour canon à neige, selon la revendication 21, caractérisé en ce que les sorties logiques (12) sont connectées au moto-réducteur (30); les entrées logiques (11) sont connectées aux fins de course de l'indicateur (40) de position du tiroir (26); les entrées du convertisseur analogique numérique (10) sont connectées d'une part, au capteur de pression disposé dans l'orifice (70) de la tubulure de sortie d'eau (17) du distributeur, et d'autre part, aux capteurs de température et d'hygrométrie disposés à proximité du canon à neige (5).

23. Installation d'enneigement artificiel des pistes de ski du type comportant une salle des machines (1) renfermant des groupes motopompe et moto-compresseur alimentant en eau et en air sous-pression, des conduites d'eau (2), d'air (3), disposées le long de la ou des pistes de ski; des abris (4) étant disposés régulièrement sur ces conduites (2 et 3), pour réaliser les branchements des canons à neige (5) et protéger ces branchements, caractérisée en ce qu'elle comporte, dans au moins un des abris (4) un dispositif d'alimentation de canon à neige, selon l'une des revendications 1 à 22.

24. Installation pour l'enneigement artificiel des pistes de ski, selon la revendication 23, caractérisée et ce qu'elle comprend des moyens d'asservissement des canons à neige constitués d'un ordinateur central (6) de gestion de l'enneigement des pistes, avec son interface (7), d'un module électronique de conversion (41) disposé dans un boîtier (24) solidaire du dispositif d'alimentation de chaque canon à neige, et d'une ligne (8) de liaison, du type ligne téléphonique, entre ladite interface (7) et ledit module électronique de conversion (41).

25. Installation pour l'enneigement artificiel de pistes de ski selon la revendication 24, caractérisée en ce que le module électronique de conversion est constitué essentiellement d'un modem (9) relié à la ligne téléphonique (8), d'un convertisseur analogique numérique (1d), d'entrées (11) et de sorties (12) logiques, le tout étant géré par un microprocesseur (13) les entrées (11) et sorties (12) logiques sont respectivement connectées aux fins de course de l'indicateur (40) de position du tiroir et au moto-réducteur (30); les entrées du convertisseur analogique numérique (10) sont connectées d'une part au capteur de pression disposé dans l'orifice (70) de la tubulure de sortie d'eau (17) de chaque distributeur et, d'autre part, aux capteurs de température et d'hygrométrie disposés à proximité de chaque canon à neige (5).

26. Installation pour l'enneigement artificiel de pistes de ski, selon l'une des revendications 24 ou 25, caractérisée en ce qu'elle comporte au moins un module électronique de conversion constitué d'un modem (9) relié à la ligne téléphonique (8), d'un convertisseur analogique numérjque (10), d'entrées (11) et de sorties (12) logies, le tout étant disposé dans la salle des machines et géré par un microprocesseur (13) pour permettre la commande, automatique des groupes motopompe et moto-compresseur et de leurs auxiliaires et la mesure des températures et pressions des différents fluides dans la salle des machines.

**Patentansprüche**

1. Versorgungseinrichtung für Schneekanonen, welche in Schutzgehäusen (4) längs der Skipiste oder von Skipisten untergebracht sind, wobei die Schutzgehäuse von Druckwasserleitungon (2) und Druckluftleitungen (3) durchquert sind, dadurch gekennzeichnet, daß sie durch einen Vorteilerschieber gebildet ist, der zum einen ein längliches Gehäuse (25) umfaßt, welches versehen ist mit
- Zulaufstutzen für Wasser (15) und Luft (16), die mit den Wasser- (2) und Luftleitungen (3) verbunden sind,
- Ausgangsstutzen für Wasser (17) und Luft (18), die durch Rohrleitungen (19, 20) mit der Schneekanone verbunden sind,
- einer Ablaßöffnung (66),
und zum anderen einen zylindrischen Schieber (26) umfaßt, welcher mit zylindrischen Dichtkragen (72, 75 und 81) versehen ist und durch ein Steuerorgan derart betätigt wird, daß der Schieber in dem Gehäuse (25) gleitet zwischen einer Schließstellung für den Wasser- (E) und Luftstrom (A), in der der Ausgangsstutzen für Wasser (17) mit der Ablaßöffnung (66) in Verbindung steht, um einen Abfluß (V) sicherzustellen, und einer Öffnungsstellung für den Wasser- (E) und Luftstrom (A) sowie einer Schließstellung für den Abfluß (V).

2. Versorgungseinrichtung für Schneekanonen nach Anspruch 1, dadurch gekennzeichnet, daß sie Mittel zur automatischen Steuerung des Verteilerschiebers (26) enthält, die einerseits aus einem Betätigungsorgan (30) für den Schieber (26) und andererseits aus einem Steuersystem für das Betätiqungsorgan (30) bestehen.

3. Einrichtung nach Anspruch 1 oder 2, dadurch gekennzeichnet, daß die Stutzen (15 - 18) in einer gemeinsamen Ebene angeordnet sind, welche durch die Längsachse (27) des Gehäuses (25) verläuft.

4. Versorgungseinrichtung für Schneekanonen nach Anspruch 3, dadurch gokennzeichnet, daß der Luftstrom (A) das Gehäuse (25) des Verteilers in seinem äußersten Teil durchläuft, der an der Seite des Betätigungsorgans (30) des Schiebers (26) gelegen ist, während die Ablaßöffnung (66) am anderen Ende (63) des Gehäuses (25) vorgesehen ist.

5. Vorsorgungseinrichtung für Schneekanonen nach einem der Ansprüche 1 bis 4, dadurch gekennzeichnet, daß das Gehäuse (25) des Verteilers in dem Schutzgehäuse (4) geneigt angeordnet ist, um einen vollständigen Abfluß des Wassers zu ermöglichen.

6. Versorgungseinrichtung für Schneekanonen nach einem der Ansprüche 3 bis 5, dadurch gekennzeichnet, daß das Gehäuse (25) des Verteilers zylindrische Abschnitte (47 und 54) zum Durchlaß des Luftstromes (A) und des Wasserstromes (E) enthält, welche Abschnitte mit zylindrischen Dichtkragen (75 und 81) auf dem Schieber (26) zusammenwirken, wobei der die Kanten (92 und 90) der Durchlaßabschnitte (47, 54) für den Luftstrom (A) und den Wasserstrom (E) in dem Gehäuse (25) trennende Abstand größer ist als der Abstand, der die entsprechenden Dichtungen (76 und 82) der Dichtkragen (75 und 81) des Schiebers (26) für Druckwasser und Druckluft trennt, um eine Öffnungsverzögerung für den Wasserstrom (E) gegenüber der Öffnung für den Luftstrom (A) zu erreichen.

7. Versorgungseinrichtung für Schneekanonen nach Anspruch 6, dadurch gekennzeichnet, daß der Dichtkragen (81) des Schiebers (26) für den Wasserstrom niederdruckseitig der Dichtung (82) einen zylindrischen Abschnitt (86) aufweist, der einen bedeutenden Druckabfall erzeugt, und dessen Länge im wesentlichen gleich ist einem Drittel des Verschiebeweges des Schiebers (26), um den Wasserstrom durch den Verteiler hindurch zunehmend aufzubauen.

8. Versorgungseinrichtung für Schneekanonen nach Anspruch 6 oder 7, dadurch gekennzeichnet, daß der Abfluß durch Mittel zum Verbinden des Wasser- Auslaßstutzens (17) des Verteilergehäuses (25) nach außen durch eine zylindrische Axialbohrung (87) an dem Ende (84) des Schiebers (26) und durch Verbindungsbohrungen (88) hindurch verwirklicht wird, die den Schieber (26) durchdringen.

9. Versorgungseinrichtung für Schneekanonen nach Anspruch 8, dadurch gekennzeichnet, daß die zylindrische Axialbohrung (87) des Schiebers (26) durch einen zylindrischen Stift (67) verschlossen ist, der mit einer Dichtung (69) versehen und an einem Deckel (65) an dem Ende (63) der Ablaufseite des Gehäuses (25) des Verteilers (14) befestigt ist, wobei die Länge des zylindrischen Stiftes (67) derartig ist, daß ein Öffnungsvoreilen des Ablaufes gegenüber der Sperrung des Zulaufes der Luft herbeigeführt wird.

10. Versorgungseinrichtung für Schneekanonen nach Anspruch 8 oder 9, dadurch gekennzeichnet, daß der Abstand der Dichtung (69) des zylindrischen stiftes (67) von der zuströmwärtsseitigen Kante (92) des Durchlassbereiches (47) für den Luftstrom (A) größer ist als der Abstand der Kante (93) am Eingang der zylindrischen Bohrung (87) des Schiebers (26) von der Dichtung (76) des Dichtkragens (75) des gleichen Schiebers (26), und daß der Abstand der Dichtung (69) des zylindrischen Stiftes (67) von der Kante (90) des Durchlaßabschnittes (54) für den Wasserstrom kleiner ist als der Abstand der Kante (93) am Eingang der zylindrischen Bohrung (87) des Schiebers (26) von der Dichtung (82) des Dichtkragens (81) desselben Schiebers (26), um eine Kaskade zu bewirken: Schließung des Abflußes, Einlaß der Luft und schließlich Einlaß des Wassers.

11. Vorsorgungseinrichtung für Schneekanonen nach einem der Ansprüche 1 bis 10, dadurch gekennzeichnet, daß der Verteilerschieber Mittel zur Steuerung der für die Schneekanone bestimmten Wasserdurchflußmenge enthält.

12. Versorgungseinrichtung für Schneekanonen nach Anspruch 11, dadurch gekennzeichnet, daß die Mittel zur Steuerung der Wasserdurchflußmenge aus einer in dem Gehäuse (25) des Verteilers angeordneten Kegelbohrung (60) bestehen, die sich von abströmwärts nach zuströmwärts erweitert und die den Wasserstrom im Zusammenwirken mit der Kante (85) des Dichtkragens (81) laminiert.

13. Versorgungseinrichtung für Schneekanonon nach Anspruch 12, dadurch gekennzeichnet, daß die Steuerung der Wasserdurchflußmenge durch den Verteiler (14) durch eine kontrollierte Verschiebung des Schiebers (26) in dem Gehäuse (25) des besagten Verteilers mit einem im wesentlichen konstanten prozentualen Zuwachs der Durchflußmenge bewerkstelligt wird, wie auch immer der Druck des zugeführten Wassers sein mag.

14. Versorgungseinrichtung für Schneekanonen nach Anspruch 13, dadurch gekennzeichnet, daß der Vorgang der Kontrolle der Wasserzuführung zu den Schneekanonen (5) durch Messung des Druckes des Wasserstromes in der Mündung (70) des Ausgangsstutzens (17) mittels eines Druckfühlers bewerkstelligt wird.

15. Vorsorgungseinrichtung für Schneekanonen nach einem der Ansprüche 11 bis 14, dadurch gekennzeichnet, daß in einer weiten Öffnungsstellung des Wasserstromes (E) die Dichtung (82) des Dichtkragens (81) durch einen Kragen (62) geschützt ist, der in dem ringförmigen Teil (59) einer Einlaßspirale (56) für den Wasserstrom (E) angoordnet ist.

16. Versorgungseinrichtung für Schneekanonen nach einem der Ansprüche 2 bis 15, dadurch gekennzeichnet, daß das Betätigungsorgan (30) für den Schieber (26) aus einem elektrischen Getriebemotor mit zwei Laufrichtungen besteht, der axial in einem Gehäuse (24) in Verlängerung des Gehäuses (25) des Verteilers angebracht ist.

17. Versorgungseinrichtung fur Schneekanonen nach Anspruch 16, dadurch gekennzeichnet, daß der Getriebemotor (30) auf den Schieber (26) durch Zwischenschaltung einer Schraube (31) einwirkt, welche in eine Bohrung (32) an dem Ende (39) des Schiebers (26) eingreift.

18. Versorgungseinrichtung für Schneekanonen nach Anspruch 17, dadurch gekennzeichnet, daß die Betätigungsschraube (31) des Schiebers (26) ein Widerlagwr (33) umfaßt, welches in einem Chassis (35) befestigt ist, das den Getriebemotor (30) trägt, um eine Verringerung des Betätigungsmomentes des Schiebers (26) zu ermöglichen.

19. Versorgungseinrichtung für Schneekanonen nach einem der Ansprüche 16 bis 18, dadurch gekonnzeichnet, daß der Schieber (26) durch einen Zapfen (37) teilweise gegen Drehung gesichert ist der in einem Längsschlitz (36) geführt ist, und der mit einer Anzeigevorrichtung (40) für die Stellung und das Ende des Vorschiebeweges des Schiebers (26) zusammenarbeitet.

20. Versorgungseinrichtung für Schneekanonen nach einem der Ansprüche 16 bis 19, dadurch gekennzeichnet, daß der Getriebemotor (30) durch ein Folgesteuerungssystem gesteuert wird, das aus einem Zentralrechner (6) zur Steuerung der Beschneeung der Pisten mit seinem Interface (7), aus einer elektronischen Wandlereinheit (41), die in einem mit dem Verteiler (14) verbundenen Gehäuse (24) angeordnet ist, und aus einer Verbindungsleitung zwischen dem Interface (7) und der elektronischen Wandlereinheit (41) besteht.

21. Versorgungseinrichtung für Schneekanonen nach Anspruch 20, dadurch gekennzeichnet, daß die elektronische Wandlereinheit im wesentlichen aus einem Modem (9), das mit einer Telefonleitung (8) verbunden ist, aus einem Analog-Digital-Wandler (10), aus Logik-Eingängen (11) und -Ausgängen (12) gebildet ist, wobei alles durch einen Mikroprozessor (13) überwacht wird.

22. Versorgungseinrichtung für Schneekanonen nach Anspruch 21, dadurch gekennzeichnet, daß die Logik-Ausgänge (12) mit dem Getriebemotor (30) verbunden eind, daß die Logik-Eingänge (11) mit den Enden der Anzeigevorrichtung (40) für die Stellung des Schiebers (26) verbunden sind und daß die Eingänge des Analog-Digital-Wandlers (10) einerseits mit dem Druckfühler, der in der Mündung (70) des Wasser-Ausgangsstutzens (17) des Vorteilers angebracht ist, und andererseits mit Meßfühlern für Temperatur und Luftfeuchtigkeit, die in der Nähe der Schneekanonen (5) angeordnot sind, verbunden sind.

23. Anlage zur künstlichen Beschneeung von Skipisten, umfassend einen Maschinenraum (1), welcher Gruppen von Druckwasser und Druckluft versorgenden Motor -Pumpen und -Kompressoren aufnimmt, Wasserleitungen (2) und Luftleitungen (3), die längs einer Skipiste oder Skipisten vorgesehen sind, Schutzgehäuse (4), die gleichmäßig verteilt an dcn Leitungen (2 und 3) angeordnet sind, um eine Verzweigung der Schneekanonen (5) zu verwirklichen und diese Verzweigungen zu schützen, dadurch gekennzeichnet, daß sie wenigstens in einem der Schutzgehäuse (4) eine Einrichtung zur Versorgung der Schneekanone gemäß einem der Ansprüche 1 bis 22 umfaßt.

24. Anlage zur künstlichen Beschneeung von Skipisten nach Anspruch 23, dadurch gekennzeichnet, daß sie Mittel zur Steuerung der Schneekanonen enthält, die aus einem Zentralrechner (6) zur Steuerung der Beschneeung der Pisten, mit seinem Interface (7), aus einer elektronischen Wandlereinheit (41), die in einem mit der Versorgungseinrichtung einer jeden Schneekanone verbundenen Gehäuse (24) untergebracht ist, sowie aus einer Verbindungsleitung (8) von der Art einer Telefonleitung zwischen dem besagten Interface (7) und der elektronischen Wandlereinheit (41) besteht.

25. Anlage zur künstlichen Beschneeung von Skipisten nach Anspruch 24, dadurch gekennzeichnet, daß die elektronische Wandlereinheit im wesentlichon aus einem Modem (9), das an Telefonleitung (8) angeschlossen ist, aus einem Analog-Digital-Wandler (10), aus Logik-Eingängen (11) und aus Logik-Ausgängen (12) gebildet ist, wobei alles durch einen Mikroprozessor (13) überwacht wird, daß die Logik-Eingägne (11) und -Ausgänge (12) mit den Enden der Anzeigevorrichtung (40) für die Stellung des Schiebers bzw. mit dem Getriebemotor (30) verbunden sind und daß die Eingänge des Analog-Digital-Wandlers (10) einerseits mit dem Druckfühler, der in der Mündung (70) des Wasser-Ausgangsstutzens (17) jedes Verteilers angebracht ist, und andererseits mit den Meßfühlern für Temperatur und Luftfeuchtigkeit, die in der Nähe jeder Schneekanone (5) angeordnet sind, verbunden sind.

26. Anlage zur künstlichen Beschneeung von Skipisten nach Anspruch 24 oder 25, dadurch gekennzeichnet, daß sie wenigstens eine elektronische Wandlereinheit umfaßt, die aus einem an der Telefonleitung (8) angeschlossenen Modem (9), aus einen Analog-Digital-Wandler (10) und aus und Logik-Eingänge (11) und -Ausgänge (12) gebildet ist, wobei alles in dem Maschinenraum untergebracht ist und durch einen Mikroprozessor (13) überwacht wird, um eine automatische Steuerung der Gruppen von Motor- Pumpen und -Kompressoren und deren Hilfsaggregaten sowie die Messung der Temperaturen und Drücke der verschiedenen Fluide in dem Maschinenraum zu ermöglichen.

**Claims**

1. Snow gun feeding device situated in shelters (4) along the ski piste or pistes, through which shelters pass pipes carrying compressed air (3) and water (2), characterized in that it is formed by a slide-valve distributor comprising on the one hand an elongate body (25) equipped:

- with water (15) and air (16) inlet tubes connected to the water (2) and air (3) pipes;

- with water (17) and air (18) outlet tubes connected by piping (19, 20) to the snow gun;

- with a drainage port (66); and on the other hand a cylindrical slide valve (26) equipped with cylindrical plugs (72, 75 and 81) and driven by a control member in a manner such as to slide in the body (25) between a position of closure of the water (E) and air (A) flows, in which position the water outlet tube (17) is in communication with the drain port (66) to ensure draining (V), and a position of opening of the water (E) and air (A) flows and of closure of drainage (V).

2. Snow gun feeding device according to claim 1, characterized in that it possesses automatic control means for the slide valve (26) of the distributor, composed on the one hand of a manoeuvring member (30) for the slide valve (26) and on the other hand of a servo-control system for the manoeuvring member.

3. Device according to claims 1 or 2, characterized in that the tubes (15 to 18) are situated in a single plane passing through the longiludinal axis (27) of the body (25).

4. Snow gun feeding device according to claim 3, characterized in that the flow of air (A) passes through the body (25) of the distributor, in the end part thereof situated on the side of the manoeuvring member (30) of the slide valve (26); the drainage port (66) is located at the other end (63) of the body (25).

5. Snow gun feeding device according to one of claims 1 to 4, characterized in that the body (25) of the distributor is arranged in an inclined manner in the shelter (4), in order to permit total drainage of the water.

6. Snow gun feeding device according to one of claims 3 to 5, characterized in that the body (25) of the distributor possesses cylindrical sections (47 and 54) for the passage of the air (A) and water (E) flows interacting with cylindrical plugs (75 and 81) on the slide valve (26); the distance separating the edges (92 and 90) of the sections for the passage (47, 54) of the air (A) and water (E) flows in the body (25) is greater than the distance separararing the sealing joints (76 and 82), which are linked, of the plugs (75 and 81) for compressed air and water of the slide valve (26), in order to effect a delay in the opening of the flow of water (E) relative to the opening of the flow of air (A).

7. Snow gun feeding device according to claim 6, characterized in that the plug (81) for the flow of water of the slide valve (26) possesses, downstream of the sealing joint (82), a cylindrical portion (86) which effects a substantial pressure drop and the length of which is substantially equal to one third of the travel C of the slide valve (26), in order gradually to establish the flow of water through the distributor.

8. Snow gun feeding device according to claim 6 or claim 7, characterized in that the drainage is produced by establishing communication between the water outlet tubes (17) of the body (25) of the distributor and the exterior, via an axial cylindrical cavity (87) at the end (84) of the slide valve (26), and passage apertures (88) pierced through the slide valve (26).

9. Snow gun feeding device according to claim 8, characterized in that the axial cylindrical cavity (87) of the slide valve (26) is plugged by a cylindrical rod (67) equipped with a sealing joint (69) fixed to a cap (65) arranged at the end (63), nearer the drain, of the body (25) of the distributor (14); the length of the cylindrical rod (67) is such as to cause the advancing of the opening of lhe drain relative to the closing of the air inlet.

10. Snow gun feeding device according to claim 8 or claim 9, characterized in that the distance separating the sealing joint (69) of the cylindrical rod (67) from the upstream edge (92) of the section for the passage (47) of the flow of air (A) is greater than the distance separating the inlet edge (93) of the cylindrical cavity (87) of the sliding valve (26) from the sealing joint (76) of the plug (75) of the same slide valve (26), and the distance separating the sealing joint (69) of cylindrical rod (67) from the edge (90) of the section for the passage (54) of the flow of water is less than the distance separating the inlet edge (93) of the cylindrical cavity (87) of the slide valve (26) from the sealing joint (82) of the plug (81) of the same slide valve (26), in order to produce in series: the closing of the drain, the opening of the air and finally the opening of the water.

11. Snow gun feeding device according to one of claims 1 to 10, characterized in that the slide-valve distributor possesses means for adjusting the flow rate of water intended for the snow gun.

12. Snow gun feeding device according to claim 11, characterized in that the means for adjusting the flow rate of water consist, in the body (25) of the distributor, of a flared portion (60) increasing from downstream to upstream which, interacting with the edge (85) of the plug (81), throttles the flow of water.

13. Snow gun feeding device according to claim 12, characterized in that the adjustment of the flow rate of water passing through the distributor (14) is effected by a controlled displacement of the slide valve (26) in the body (25) of the said distributor, with a substantially constant percentage increase in flow rate whatever may be the feed-water pressure.

14. Snow gun feeding device according to claim 13, characterized in that the operation of monitoring the water feed to the snow guns (5) is performed by measuring the pressure in the aperture (70) of the outlet tube (17) of the flow of water, by means of a pressure sensor.

15. Snow gun feeding device according to one of claims 11 to 14, characterized in that, in the wide open position of the flow of water (E), the sealing joint (82) of the plug (81) is protected by a collar (62) arranged in the annular part (59) of the inlet volute (56) of the flow of water (E).

16. Snow gun feeding device according to one of claims 2 to 15, characterized in that the manoeuvring member (30) for the slide valve (26) is formed by a two-way rotary electric back-geared motor arranged axially in a housing (24) extending the body (25) of the distributor.

17. Snow gun feeding device according to claim 16, characterized in that the back-geared motor (30) acts on the slide valve (26) via a screw (31) engaging in a bore (32) at the end (39) of the slide valve (26).

18. Snow gun feeding device according to claim 17, characterized in that the manoeuvring screw (31) for the slide valve (26) comprises a stop bearing (33) fixed to the chassis (35) supporting the back-geared motor (30), in order to permit a reduction in the torque for manoeuvring the slide valve (26).

19. Snow gun feeding device according to one of claims 16 to 18, characterized in that the slide valve (26) is partly immobilized for rotation by means of a pawl (37) which is guided in a longitudinal port (36) and interacts with a device (40) for indicating the position and end of travel of the slide valve (26).

20. Snow gun feeding device according to one of claims 16 to 19, characterized in that the back-geared motor (30) is controlled by means of a servo-control system comprising a central computer (6) for managing the application of snow to the pistes, with its interface (7), an electronic conversion module (41) arranged in the housing (24) fixed to the distributor (14), and a connecting line (8) between the said interface (7) and the electronic conversion module (41).

21. Snow gun feeding device according to claim 20, characterized in that the electronic conversion module essentially comprises a modem (9) connected to the telephone line (8), an analogue/digital converter (10), and logic input (11) and output (12) points, the whole being controlled by a microprocessor (13).

22. Snow gun feeding device according to claim 21, characterized in that the logic output points (12) are connected to the back-geared motor (30); the logic input points (11) are connected to the ends of travel of the indicator (40) of the position of the slide valve (26); the input points of the analogue/digital converter (10) are connected on the one hand to the pressure sensor arranged in the aperture (70) of the water output tube (17) of the distributor, and on the other hand to the temperature and humidity sensors located close to the snow gun (5).

23. Installation for the artificial application of snow to ski pistes, of the type comprising a machine room (1) containing motor-pump and motor-compressor sets for supplying water and air under pressure, water (2) and air (3) pipes laid along the ski piste or pistes; shelters (4) being disposed regularly along these pipes (2 and 3) for connecting the snow guns (5) and protecting these connections, characterized in that it possesses, in at least one of the shelters (4), a snow gun feeding device according to one of claims 1 to 22.

24. Installation for the artificial application of snow to ski pistes according to claim 23, characterized in that it comprises means for servo-control of the snow guns formed by a central computer (6) for managing the application of snow to the pistes, with its interface (7), an electronic conversion module (41) arranged in a housing (24) fixed to the feeding device of each snow gun, and a connecting line (8), of the telephone-line type, between the said interface (7) and the said electronic conversion module (41).

25. Installation for the artificial application of snow to ski pistes according to claim 24, characterized in that the electronic conversion module is essentially composed of a modem (9) connected to the telephone line (8), of an analogue/digital converter (10), and logic input (11) and output (12) points, the whole being controlled by a microprocessor (13); the logic input (11) and output (12) points are respectively connected to the ends of travel of the indicator (40) of the position of the slide valve and to the back-geared motor (30); the input points of the analogue/digital converter (10) are connected on the one hand to the pressure sensor arranged in the aperture (70) of the water outlet tube (17) of each distributor and, on the other hand, to the temperature and humidity sensors arranged in the vicinity of each snow gun (5).

26. Installation for the artificial application of snow to ski pistes, according to one of claims 24 or 25, characterized in that it comprises at least one electronic conversion module composed of a modem (9) connected to the telephone line (8), of an analogue/digital converter (10), and of logic input (11) and output (12) points, the whole being arranged in the machine room and controlled by a microprocessor (13) in order to permit automatic control of the motor-pump and motor-compressor sets and of their auxiliaries and the measurement of the temperatures and pressures of the various fluids in the machine room.

_fig. 1_

_fig. 2_

_fig. 3_

fig. 4

Fig. 5

_fig.6_

_fig.7_

-fig. 8-

_fig.9_

_fig. 10_